# EUROPEAN PATENT APPLICATION

(11) **EP 1 806 882 A1**
(43) Date of publication of application: **11.07.2007**
(21) Application number: 06290046.9
(22) Date of filing: 05.01.2006
(51) Int. Cl.: H04L 12/56, H04L 29/06

(54) **Wireless communication network, air interface and method for mapping user traffic**

(71) Applicant: Alcatel Lucent, 75008 Paris (FR)
(72) Inventor: De Juan Huarte, Frederico, 75014 Paris (FR); Conte, Alberto, 75014 Paris (FR)
(74) Representative: Kohler Schmid Möbus

(57) **Abstract**

An air interface (1) according to IEEE 802.16 standard is characterized in that packet classification rules provided in a convergence sub layer (3) for mapping user traffic received at said air interface (1) in form of packets to a predefined connection comprise a generic classification rule with a user-defined value which contains information not available in said packets, said value being received from/delivered to higher layers (2) of the air interface (1) at/from said convergence sub layer (3). The convergence sub layer (3) is preferably arranged to process the user defined information for univocally identifying the predefined connection in combination with the information contained in the packets.

## Description

### Field of the invention

The present invention relates to an air interface in accordance with the IEEE 802.16 standard, said air interface comprising at least one higher layer and a convergence sub layer arranged for mapping user traffic received on said air interface in form of packets according to a predefined protocol to a predefined connection on said air interface, wherein said convergence sub layer is operatively provided with packet classification rules for carrying out said mapping of said packets to the predefined connection, and to a method for mapping user traffic received in form of packets according to a predefined protocol on an air interface according to IEEE 802.16 standard to a predefined connection on said air interface, said method comprising the steps of:
- forwarding said packets to a convergence sub layer, and
- applying at said convergence sub layer packet classification rules for mapping said packets to the predefined connection.

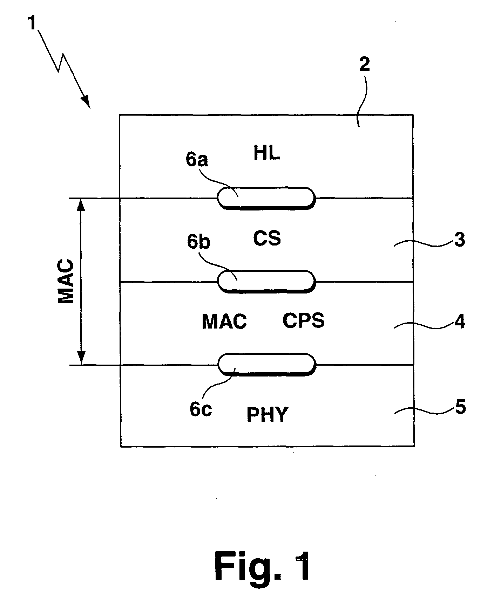

The IEEE 802.16 standard defines the wireless air interface specification for wireless metropolitan area networks (MANs). Such networks provide network access to fixed user equipment (subscriber stations) or mobile stations (MS) through exterior antennas communicating with a central radio base station (BS). All of these stations have in common a reference model of the data/control plane of the air interface **1** which is represented in **Fig. 1.**

According to the standard, a hierarchical layering is provided, having a physical layer **5** as the lowermost layer in which the details of the wireless transmission for a given frequency range are specified, e.g. for the 10 to 66 GHz range, the use of single carrier modulation, time-division multiplexing (TDM) in the downlink and time division multiple access (TDMA) in the uplink. On top of the physical layer, a medium access control layer **(MAC)** is provided, comprising three sub layers, namely a MAC common part sub layer (CPS) **4,** a convergence sub layer **3,** and a security sub layer (not shown). Between the MAC CPS 4 and the physical layer 5, a service access point (SAP) 6c is provided for transferring data, PHY control and statistics between these two layers.

The MAC CPS 4 provides the core MAC functionality of system access, bandwidth allocation, connection establishment and connection maintenance. The MAC CPS **4** exchanges data with the service-specific convergence sub layer 3 via a corresponding SAP **6b,** which itself comprises a further service access point **6a** for information exchange with higher layers **2** of the air interface 1. The type of the convergence sub layer 3 depends on the service provided in the higher layers 2. As the air interface 1 is connection-oriented, when using packet services in the higher layers 2, the convergence sub layer 3 needs to perform a mapping of the user traffic according to a certain user protocol stack (e.g. IPv4, IPv6, Ethernet or virtual local area network (VLAN)) to a certain connection by using a classification function.

Implementing the CS 3 therefore requires among other things the definition of the packet classification rules that will be used to map a packet to a certain connection. For every supported user protocol stack the IEEE 802.16 standard defines a convergence sub layer with its associated packet classification rules: For instance, an IPv4 convergence sub layer would transport pure raw IPv4 packets on top of 802.16 (IP: abbreviation for "internet Protocol"). The available classification rules are in this case: source IP address, destination IP address, protocol type, source port number and destination port number.

A problem raised by this convergence sub layer is that these classification rules only include fields which are available in the packets passed by the upper layers 2, thereby making it impossible to use out-of-band information. This has already proved to be a limitation in the context of the WIMAX forum (an industry coalition whose members are organized to promote IEEE 802.16 standards) when trying to support multiple hosts behind a single subscriber station in an unbundled network access provider (NAP). More specifically, the problem is due to the collision of privately allocated IP addresses by different network service providers (NSP).

A scenario depicting the above problem is the following: Two different users might have the same (private) IP address if they belong to different network service providers. If these two users are accessing the network via the same subscriber station, the convergence sub layer is not capable to differentiate between them, and therefore all user related functionality such as authorisation, quality of service (QoS) charging, etc is spoiled.

The currently proposed solutions in the context of the WIMAX forum are:
- transport IP over Ethernet over 802.16: This solution requires including the Ethernet protocol as part of the architecture. This prevents having a pure IP solution. Further in parallel to Ethernet there would be a need to support IP over ATM over 802.16 as well. Further, this solution requires implementing an Ethernet layer both in the single subscriber and in the base station and increases the packet overhead by adding the Ethernet header. Besides, transporting Ethernet (i.e. 802.3) on top of 802.16 doesn't provide any added value.
- Implement Network Address and Port Translation (NAPT): It is largely acknowledged in the networking community that NAPT based solutions present multiple inconveniences which can be summarised by the fact that the end-to-end model is broken.

It should be noted that in cellular networks based on third Generation Partnership Project (3GPP) or 3GPP2 which deals with the evolution of the mobile network by radio access network sharing, the above problem does not appear because:
- radio access network sharing is not a usual deployment scenario,
- user traffic is tunnelled from the subscriber station up to the serving GPRS support node (SGSN). That is, the Mobile Core Node that is responsible for the delivery of data packets from and to the mobile station within its geographical service area, and
- a scenario contemplating multiple users behind the same subscriber station is not covered.

Further, notably in fixed networks (such as DSL) this problem is solved by design because the network architecture already provides for service providers segregation at the source (user) based on the VLAN technology.

The other well-known wireless broad band technology, the WIFI, does not define an end-to-end network architecture but a hotspot approach and is therefore not exposed to the above-defined situation.

Finally, 802.16 WIMAX forum and technology is still in the process of defining the architecture, and although for solving this problem, other solutions have been proposed such as the transport of IP over Ethernet over 802.16 and the implementation of NAPT in the subscriber station, both have the disadvantageous features as described above.

### Object of the invention

It is a first object of the present invention to provide a method for mapping user traffic in an air interface based on IEEE 802.16 standard which allows the use of out-of-band information.

As second object of the present invention is to provide an air interface according to IEEE 802.16 standard which is designed so that the use of out-of-band information can be achieved and in particular, if two or more users having the same (private) IP-Address and belonging to different network service providers are accessing the network via the same subscriber station, the convergence sub layer is capable to differentiate between them.

### Short description of the invention

The above objects are solved in accordance with the enclosed independent claims 1 and 6, respectively.

That is, according to a first aspect of the invention, a method of the above-mentioned kind is provided wherein said packet classification rules comprise a generic classification rule with a user-defined value which contains information not available in said packets, said value being received from/delivered to higher layers of the air interface at/from said convergence sub layer.

Further, according to a second aspect, the present invention provides an air interface of the above-mentioned kind, wherein said packet classification rules comprise a user-defined classification rule with a value including user-defined information not available in said packets and means for exchanging said value between the higher layer and said convergence sub layer. The air interface is preferably part of a base station, a subscriber station or a mobile station of a wireless communication network.

Accordingly, the basic idea of the present invention is allowance for a generic "user-defined" packet classification rule. The user-defined information contained in the user-defined value can be received/delivered from/to the higher layers along with the medium access control protocol data unit. This is a generic mechanism that allows to use the out-of-band information provided in the user defined field for different purposes, e.g. for providing multiple host support, thus providing service provider identification in the convergence sub layer independently of the user protocol stack, as described below. Such a generic, user-defined classification rule may also serve as a toolbox for future requirements, which may not be anticipated today.

In a preferred variant of the method and a corresponding embodiment of the air interface, the user-defined value contains information for univocally identifying said predefined connection in combination with the information contained in said packet, and the convergence sub layer is arranged to process said user-defined information for univocally identifying the predefined connection in combination with the information contained in said packet. In this case, the user-defined value is chosen to be characteristic for the specific user transferring this packet, such that the problem with the same IP addresses being associated to different users can be solved by using the additional information contained in the user defined field.

Preferably, the predefined protocol of said packets is the internet protocol. The IEEE 802.16 standard is compatible with packets of various types, but IP packets are preferred. Note that each packet type is associated with a corresponding type of CS layer, as has already been described above.

Further preferably, the predefined connection identified by means of the user-defined information is associated to a service provider. A special case of a service provider is an internet service provider, whose service is access to the internet. Other cases of service providers are an application service provider or a storage service provider.

It is further preferred that the user-defined value is exchanged with the higher layers along with medium access control packet data units through an internal interface the design of which depends upon an implementation choice.

It is further preferred that said user defined classification rule is implemented by adding the following specification of a type length value to said packet classification rule:
Type: [145/146].cst.3.X, wherein according to IEEE 802.16 standard
X denotes a new identifier,
3 denotes the packet classification rule,
cst denotes any type of the convergence sub layer,
[145/146] denotes uplink/downlink (UP/DN) service flow, and
the length is to be defined.

The method for mapping user traffic and the air interface working according to the present method has revealed to include following main advantages:
1. No overhead is produced which allows for better usage of radio resources and achieves higher throughputs;
2. Layer 2 agnostic architecture (pure internet protocol);
3. Reduced capital expenditure due to cheaper network elements (base station, gateway) since the required protocol stack is minimized (no tunneling), and
4. Reduced operating expenditure since there is no need to operate additional tunneling protocols.

Remarkably, the method and system according to the present invention implies an update to the IEEE 802.16 standard which will have an impact on interoperability.

Further advantages and characteristics of the present invention can be gathered from the following description of preferred embodiments given by way of example only with reference to the enclosed drawings. The features mentioned above as well as below can be used in accordance with the present invention either individually or in conjunction. The embodiments mentioned are not to be understood as an exhaustive enumeration but rather as examples with regard to the underlying concept of the present invention.

### Drawings

- Fig. 1: is a schematic diagram illustrative of an air interface based on IEEE 802.16 standard;

### Detailed description

In the following, a method for mapping user traffic received in form of IP packets to a connection will be described with reference to Fig. 1, which schematically illustrates in functional blocs an example of the constitution of an air interface according to IEEE 802.16 standard, which has already been described in detail in the introductory part.

In a first step, the IP packets are forwarded from the higher layers 2 of the air interface 1 to the convergence sub layer 3 via service access point 6a. The convergence sub layer 3 applies packet classification rules for mapping these IP packets to a connection. As a connection, one or more fixed or mobile transmitter/receiver station and/or subscriber station which may also have further transmitter/receiver units may be used. The classification rules available on the convergence sub layer CS 3 are in the case of IP packets: Source IP address, destination IP address, protocol type, source port number and destination port number.

As already described in the introductory part, the problem of the packet classification rules that are actually standardized by IEEE 802.16 is that these classification rules only include fields which are available in the packets passed by the upper layer 2 thereby making it impossible to use out-of-band information. When multiple hosts behind a single subscriber station are to be supported in an unbundled network access provider, privately allocated IP addresses may collide if for example two users have the same IP address and belong to different network service providers. This will result in mapping both packets to the same connection, such that all user related functionality (authorization, QoS, charging ...) is spoiled.

In view of the above, an air interface is provided with a further packet classification rule in the convergence sub layer 3, namely a generic classification rule including a user defined field UDF with user-defined information not available in the PDU, meant to be received from/delivered to the higher layers 2 at/from the convergence sub layer CS 3. The convergence sub layer 3 is arranged to process the UDF for univocally identifying a certain connection in combination with the IP information contained in the packets, e.g. by combining the generic classification rule with classification rules according to the standard.

For implementing the user-defined classification rule in the CS, the following specification of a type length value TLF should be added according to the 802.16 terminology:
Type: [145/146].cst.3.X, wherein according to IEEE 802.16 standard
X denotes a new identifier,
3 denotes the packed classification rule,
cst denotes any type of the convergence sub layer,
[145/146] denotes uplink/downlink (UP/DN) service flow, and the length is to be defined.

It is to be mentioned that the UDF is a value meant to be passed by the higher layer along with the MAC PDU via the service access point 6a to allow classification based on information not available in the packet. The user-defined value is transferred from the user to the higher layers and back.

Of course, adding a generic classification rule to the classification rules which are defined in the IEEE 802.16 standard implies an update of that standard. However, the implementation of a classification rule with an UDF provides the following advantages:
- Multiple hosts behind a singe subscriber station SS in an unbundled network access provider can be supported;
- the problem that the convergence sub layer is not capable of a differentiating between a plurality of users accessing the wireless network via the same subscriber station SS is obviated;
- no overhead which allows for better usage of radio resources and higher throughputs;
- layer 2 agnostic architecture (pure IP);
- reduced capital expenditure due to cheaper network elements (base station, gateway) since the required protocol stack is minimized (no tunnelling), and
- reduced operating expenditure since no need to operate additional tunnelling protocols.

## Claims

1. A method for mapping user traffic received in form of packets according to a predefined protocol on an air interface (1) according to IEEE 802.16 standard to a predefined connection on said air interface (1), said method comprising the steps of:
- forwarding said packets to a convergence sub layer (3),
- applying at said convergence sub layer (3) packet classification rules for mapping said packets to the predefined connection, said method being
**characterised in that**
said packet classification rules comprise a generic classification rule with a user-defined value which contains information not available in said packets, said value being received from/delivered to higher layers (2) of the air interface (1) at/from said convergence sub layer (3).

2. Method according to claim 1, **characterized in that** said value contains information for univocally identifying said predefined connection in combination with the information contained in said packets.

3. The method of claim 1, wherein said predefined protocol of said packets is the internet protocol.

4. The method of claim 1, wherein said user-defined value is exchanged with the higher layers along with medium access control protocol data units [MAC PDU].

5. The method of claim 1, wherein for implementing said user-defined classification rule, the following specification of a type length value [TLV] is added to said packet classification rules:
Type: [145/146].cst.3.X, wherein according to IEEE 802.16 standard
X denotes a new identifier,
3 denotes the packet classification rule,
cst denotes any type of the convergence sub layer,
[145/146] denotes uplink/downlink (UP/DN) service flow, and the length is to be defined.

6. Air interface (1) in accordance with the IEEE 802.16 standard, said air interface comprising at least one higher layer (2) and a convergence sub layer (3) arranged for mapping user traffic received on said air interface in form of packets according to a predefined protocol to a predefined connection on said air interface, wherein said convergence sub layer (3) is operatively provided with packet classification rules for carrying out said mapping of said packets to the predefined connection,
said air interface (1) being **characterised in that** said packet classification rules comprise a user-defined classification rule with a value including user-defined information not available in said packets and means (6a) for exchanging said value between the higher layer (2) and said convergence sub layer (3).

7. Air interface according to claim 6, wherein said convergence sub layer (3) is arranged to process said user-defined information for univocally identifying said predefined connection in combination with the information contained in said packets.

8. Air interface according to claim 6, wherein said predefined protocol of said packets is the internet protocol.

9. Air interface according to claim 6 , wherein said convergence sub layer (3) and said higher layers (4) exchange the user-defined value with the higher layers along with medium access control packet data units [MAC PDUs].

10. Air interface according to claim 6, wherein for implementing said user-defined classification rule, the following specification of a type length value [TLV] is added to said packet classification rules of the convergence sub layer (3):
Type: [145/146].cst.3.X, wherein according to IEEE 802.16 standard
X denotes a new identifier,
3 denotes the packet classification rule,
cst denotes any type of the convergence sub layer,
[145/146] denotes uplink/downlink (UP/DN) service flow and, the length is to be defined.

11. Wireless communication network comprising at least one air interface (1) as defined in claim 6.

## Amended claims

### Amended claims in accordance with Rule 86(2) EPC.

**1.** A method for mapping user traffic received from a user in form of packets according to a predefined protocol on an air interface (1) according to IEEE 802.16 standard to a predefined connection on said air interface (1), said method comprising the steps of:
- forwarding said packets to a convergence sub layer (3),
- applying at said convergence sub layer (3) packet classification rules for mapping said packets to the predefined connection,
wherein said packet classification rules comprise a generic classification rule with a certain value,
**characterised in that** said certain value is a user-defined value containing information not available in said packets, said user-defined value being transferred from the user to higher layers (2) of the air interface (1), received from said higher layers (2) at said convergence sub layer (3), and delivered from said convergence sub layer (3) to said higher layers (2).

**2.** The method according to claim 1, **characterized in that** said user-defined value contains information for univocally identifying said predefined connection in combination with the information contained in said packets.

**3.** The method of claim 1, wherein said predefined protocol of said packets is the internet protocol.

**4.** The method of claim 1, wherein said user-defined value is exchanged with the higher layers along with medium access control protocol data units, MAC PDU.

**5.** The method of claim 1, wherein for implementing said generic classification rule, the following specification of a type length value, TLV, is added to said packet classification rules:
Type: [145/146].cst.3.X, wherein according to IEEE 802.16 standard
X denotes a new identifier,
3 denotes the packet classification rule,
cst denotes any type of the convergence sub layer,
[145/146] denotes uplink/downlink, UP/DN, service flow.

**6.** An air interface (1) in accordance with the IEEE 802.16 standard, said air interface comprising at least one higher layer (2) and a convergence sub layer (3) arranged for mapping user traffic received on said air interface in form of packets according to a predefined protocol to a predefined connection on said air interface, wherein said convergence sub layer (3) is operatively provided with packet classification rules for carrying out said mapping of said packets to the predefined connection, said packet classification rules comprising a generic classification rule with a certain value,
**characterised in that** said certain value is a user-defined value received from a user and including user-defined information not available in said packets, and **in that** said air interface further comprises means (6a) for exchanging said user-defined value between the higher layer (2) and said convergence sub layer (3).

**7.** The air interface according to claim 6, wherein said convergence sub layer (3) is arranged to process said user-defined information for univocally identifying said predefined connection in combination with the information contained in said packets.

**8.** The air interface according to claim 6, wherein said predefined protocol of said packets is the internet protocol.

**9.** The air interface according to claim 6 , wherein said convergence sub layer (3) and said higher layers (4) exchange the user-defined value with the higher layers along with medium access control packet data units, MAC PDUs.

**10.** The air interface according to claim 6, wherein for implementing said user-defined classification rule, the following specification of a type length value, TLV, is added to said packet classification rules of the convergence sub layer (3):
Type: [145/146].cst.3.X, wherein according to IEEE 802.16 standard
X denotes a new identifier,
3 denotes the packet classification rule,
cst denotes any type of the convergence sub layer,
[145/146] denotes uplink/downlink, UP/DN, service flow.

**11.** A wireless communication network comprising at least one air interface (1) as defined in claim 6.
